# FASCICULE DE BREVET EUROPEEN

(11) **EP 3 347 112 B1**
(45) Date de publication et mention de la délivrance du brevet: **04.09.2019**
(21) Numéro de dépôt: 16775275.7
(22) Date de dépôt: 30.08.2016
(51) Int. Cl.: B01D 1/00, F16K 17/16, G21C 9/008

(54) **DISPOSITIF DE CONVERSION D'UN LIQUIDE EN VAPEUR**
VORRICHTUNG ZUR UMWANDLUNG EINER FLÜSSIGKEIT IN DAMPF
DEVICE FOR CONVERTING A LIQUID INTO VAPOUR

(30) Priorité: 07.09.2015 FR 1558290
(43) Date de publication de la demande: 18.07.2018
(73) Titulaire: Commissariat à l'Energie Atomique et aux Energies Alternatives, 75015 Paris (FR)
(72) Inventeur: CHATROUX, André, 38210 Tullins (FR); GIROUD, Pascal, 38410 Saint Martin D'uriage (FR); GOUSSEAU, Georges, 38430 Moirans (FR)
(74) Mandataire: Cabinet Laurent & Charras
(86) Numéro de dépôt international: PCT/FR2016/052140
(87) Numéro de publication internationale: WO 2017/042449

(56) Documents cités:
- CN-Y- 2 158 515
- GB-A- 915 826
- US-A- 3 736 235
- US-A- 3 776 251
- US-A1- 2002 102 182

## Description

### DOMAINE DE L'INVENTION

L'invention se rapporte au domaine des générateurs de vapeur, et notamment aux générateurs de vapeur utilisés dans les électrolyseurs de vapeur d'eau à haute température (EHVT).

L'invention concerne plus particulièrement la prévention des surpressions dans un dispositif de conversion d'un liquide en vapeur fonctionnant à vapeur constante, notamment à pression atmosphérique ou sous quelques dizaines de bars.

### ETAT DE LA TECHNIQUE

Un électrolyseur de vapeur d'eau à haute température (EVHT, acronyme pour « Electrolyse de la Vapeur d'eau à Haute Température », ou HTSE acronyme anglo-saxon pour « *High Temperature Steam Electrolysis* ») est un dispositif électrochimique de production d'hydrogène à partir de la vapeur d'eau par application d'un courant électrique à en empilement de cellules électrolytiques connectées électriquement en série, et constituées chacune de deux électrodes, à savoir une cathode et une anode, intercalant une membrane électrolytique à oxyde solide. Globalement, de la vapeur d'eau est introduite au niveau de la cathode de chaque cellule alimentée en électricité, et une réaction de réduction électrochimique de la vapeur d'eau conduit à la formation d'hydrogène sur la cathode.

De manière générale, pour un point de fonctionnement donné de l'électrolyseur, il existe un courant électrique à appliquer à ce dernier, et le débit de vapeur d'eau à introduire dans l'électrolyseur est calculé en fonction de l'intensité du courant électrique appliqué sur l'électrolyseur. L'intensité de courant pouvant généralement varier de 0 à 100% de la gamme de fonctionnement de l'électrolyseur, il est donc également nécessaire que le débit de vapeur à générer puisse également évoluer linéairement de 0 à 100% de capacité, et être composé uniquement de vapeur.

En outre, un électrolyseur est un système très sensible aux inhomogénéités de courant/débit de gaz, ces homogénéités pouvant en effet entrainer un vieillissement prématuré de l'électrolyseur. Par exemple, si le débit de vapeur varie autour de sa valeur de consigne, on peut observer une instabilité du point de fonctionnement de l'électrolyseur, qui se traduit par des variations de la tension des cellules, cause de vieillissement prématuré. Plus grave, de fortes variations du débit de vapeur ont pour conséquence des variations de la pression de quelques dizaines ou centaines de millibars, lesquelles peuvent être suffisantes pour endommager les joints d'étanchéité ou fissurer les cellules électrochimiques elles-mêmes. Il est donc recherché un débit de vapeur le plus homogène et régulier possible.

Les dispositifs de production de vapeur comportent généralement une surface d'évaporation chauffée, sur laquelle un liquide est déposé de sorte à générer l'évaporation du liquide. Lorsque la vapeur est produite dans une enceinte fermée, il est nécessaire de prévoir une sécurité contre les surpressions dans un dispositif de conversion d'un liquide en vapeur fonctionnant à vapeur constante, notamment à pression atmosphérique ou sous quelques dizaines de bars. La sécurité contre les surpressions permet de limiter le risque d'explosion de l'enceinte fermée.

En France, la règlementation sur les dispositifs d'évaporation comporte des règles faisant l'objet de publications sous forme de Document Technique Unifié (DTU). Ces règles sont globalement identiques dans tous les pays. Elles sont basées sur l'expérience des chaudiéristes, et imposent la présence d'un élément de sécurité en pression (soupape de sécurité ou disque de rupture) installé dans une zone de l'enceinte toujours remplie de vapeur. De la même façon, les règles préconisent l'installation d'un équipement de mesure de pression (manomètre ou capteur de pression) en partie haute du dispositif.

Sur les chaudières classiques contenant une phase d'eau liquide en partie basse et une phase vapeur en partie haute, cet élément de sécurité ou cet équipement de mesure de pression doivent être dimensionnés pour fonctionner à la température de la vapeur, mais ils ne sont pas obligatoirement calorifugés et peuvent constituer des points froids, sources de condensation interne au dispositif. Cela ne pose pas de problème car les gouttes d'eau qui se condensent vont tomber et se mélanger à la phase liquide déjà présente en fond de dispositif, sans plus de conséquences. C'est par exemple la solution appliquée dans le document CN 2,158,515 qui intègre une soupape en partie haute. US3736235A et GB915826A divulguent aussi des évaporateurs.

Dans le cas particulier du système de conversion de liquide en vapeur utilisé dans les électrolyseurs de vapeur d'eau à haute température, dont l'un des objectifs majeurs est une grande stabilité de pression, il n'est pas acceptable que des gouttes d'eau puissent se condenser sur des points froids et tomber au fond du dispositif. Elles auraient pour conséquence des variations de pression et de débit de vapeur dues à la vaporisation quasi instantanée de chaque goutte sur le fond très chaud du dispositif.

Suivant un mode de réalisation respectant la règlementation sur les dispositifs d'évaporation, il est possible d'installer une soupape et un capteur de pression en prenant soin de les calorifuger et de les chauffer afin qu'ils soient maintenus à une température supérieure à la température de condensation de la vapeur à la pression considérée de fonctionnement du dispositif. Cela nécessite d'utiliser une soupape et un capteur de pression capables de fonctionner à une température comprise entre 200 et 300°C, donc des équipements relativement complexes à fabriquer et à mettre en oeuvre. Le coût de fabrication et d'installation d'une telle solution s'en trouve donc surenchéri.

Suivant un autre mode de réalisation respectant la règlementation sur les dispositifs d'évaporation, il est envisageable d'installer un disque de rupture et un capteur de pression capables de fonctionner à une température comprise entre 200 et 300°C tout en prenant soin de les calorifuger. Cette solution est intéressante du point de vue économique, car le disque de rupture est peu coûteux. Cependant, le disque de rupture nécessite davantage d'interventions humaines et d'indisponibilités du dispositif de vapeur, car il doit être remplacé à chaque déclenchement. En effet, il se détruit après son fonctionnement, puisqu'il comporte une membrane métallique qui se rompt lorsque la pression de rupture est atteinte. Il y aura donc un coût d'intervention plus élevé qu'avec une soupape. De même, le capteur de pression doit fonctionner entre 200 et 300°C ce qui induit une complexité et un coût élevé.

En respectant la règlementation sur les dispositifs d'évaporation, il n'y a pas de solution économiquement intéressante, c'est-à-dire basée uniquement sur des composants peu coûteux, qui permette la mesure et la sécurité en pression d'un dispositif tout en limitant la durée d'indisponibilité du dispositif et les interventions de remise en service.

Le problème technique de l'invention est de limiter la température de fonctionnement et la maintenance d'un dispositif d'évaporation respectant la réglementation.

### EXPOSE DE L'INVENTION

La présente invention propose de résoudre ce problème technique au moyen d'un disque de rupture protégé par des moyens de limitation de la pression installés sur une entrée d'alimentation en liquide du dispositif.

A cet effet, l'invention concerne un dispositif de conversion d'un liquide en vapeur comportant :
- une enceinte munie d'une ouverture connectée à une entrée de liquide, d'une ouverture de dépressurisation et d'une sortie de vapeur,
- un régulateur de débit disposé au niveau de l'entrée de liquide,
- un disque de rupture installé au niveau de l'ouverture de dépressurisation, et
- des moyens de limitation de la pression disposés au niveau de l'entrée de liquide, lesdits moyens de limitation de la pression étant configurés pour réduire le débit dans l'entrée de liquide lorsque la pression dans l'entrée de liquide dépasse une valeur seuil inférieure à une pression de rupture du disque de rupture.

L'invention permet donc de mettre en oeuvre une sécurité contre les surpressions avec deux niveaux :
- un premier niveau classique est réalisé par un disque de rupture, et
- un deuxième niveau est réalisé par une réduction du débit de liquide puis une évacuation de la vapeur en excès au niveau de l'entrée de liquide.

Le premier niveau de sécurité permet de répondre à la règlementation sur les dispositifs de conversion d'un liquide en vapeur. Il est étalonné à la pression maximale admissible par le dispositif conformément à la réglementation.

Le deuxième niveau de sécurité n'est, a priori, pas envisagé par les spécialistes du domaine technique car il n'est pas conforme à la réglementation. Ce deuxième niveau de sécurité est prévu pour se déclencher à une pression inférieure à la pression maximale admissible par le dispositif et présente l'avantage de fonctionner à température ambiante.

L'utilisation d'une soupape et/ou d'un capteur de pression implanté au niveau de l'entrée de liquide ne nécessite donc pas d'utiliser des équipements complexes à fabriquer et à mettre en oeuvre. Ainsi, des équipements standardisés peuvent être utilisés. En effet, l'entrée de liquide est remplie de fluide incompressible qui transmet la surpression de l'enceinte dans l'entrée de liquide. Ainsi, dans la mesure où cette l'entrée de liquide est courte et horizontale, la pression au niveau du raccordement du capteur et/ou de la soupape est égale à la pression interne du dispositif de conversion d'un liquide en vapeur.

Selon un mode de réalisation, les moyens de limitation de la pression comportent un capteur de pression, le régulateur de débit étant configuré pour stopper le débit de liquide injecté dans l'entrée de liquide lorsqu'une pression mesurée par le capteur de pression dépasse une valeur seuil. Le capteur de pression permet de mesurer la pression du dispositif à température ambiante au niveau de l'entrée de liquide avec un capteur de pression standard et à bas coût.

Selon un mode de réalisation, le dispositif comporte également des moyens de chauffage disposés dans l'enceinte, les moyens de chauffage étant configurés pour stopper le chauffage de l'enceinte lorsqu'une pression mesurée par le capteur de pression dépasse une valeur seuil. L'asservissement de sécurité stoppe ainsi le chauffage de la résistance chauffante interne du dispositif de façon à ne plus vaporiser le liquide encore présent dans le dispositif. L'inertie thermique de ces moyens de chauffage étant très faible, cet asservissement stoppe de façon très efficace l'augmentation de la pression.

Selon un mode de réalisation, la valeur seuil de la pression mesurée par le capteur de pression est comprise entre 1% et 90% de la pression de rupture du disque de rupture. Ce mode de réalisation permet d'anticiper l'augmentation de la pression dans le dispositif.

Selon un mode de réalisation, le dispositif comporte également un évent de sécurité en communication hydraulique avec l'ouverture de dépressurisation de sorte à canaliser la vapeur issue de l'enceinte lorsque le disque de rupture est ouvert.

Selon un mode de réalisation, l'enceinte et au moins une partie de l'évent de sécurité sont recouverts d'une isolation thermique. Ce mode de réalisation permet d'éviter de créer des points froids. En variante, au moins une partie de l'évent de sécurité peut également être chauffée au niveau du raccordement avec le disque de rupture.

Selon un mode de réalisation, les moyens de limitation de la pression comportent une soupape connectée d'une part, à l'entrée de liquide et d'autre part, à l'évent de sécurité, la soupape étant configurée pour extraire une partie du liquide présent dans l'entrée de liquide lorsque la pression dans l'entrée de liquide dépasse une valeur seuil. En cas de surpression ayant pour conséquence une ouverture de la soupape, la vapeur présente dans le volume de l'enceinte va pousser le liquide présent dans l'entrée de liquide jusqu'à la vider complètement. C'est seulement ensuite que la vapeur va pouvoir sortir par la soupape. L'un des avantages de cette solution est justement de vider l'entrée de liquide en cas de surpression, et donc d'empêcher que ne rentre dans le dispositif du liquide qui aurait contribué à faire davantage augmenter la pression.

Selon un mode de réalisation, la valeur seuil d'ouverture de la soupape est comprise entre 80% et 95% de la pression de rupture du disque de rupture.

Selon un mode de réalisation, l'ouverture de dépressurisation est disposée au niveau d'une paroi supérieure de l'enceinte.

Selon un mode de réalisation, l'ouverture de dépressurisation est disposée au niveau d'un conduit reliant l'enceinte à la sortie de vapeur.

### BREVE DESCRIPTION DES FIGURES

L'invention sera mieux comprise à la lecture de la description qui va suivre, donnée uniquement à titre d'exemple, et réalisée en relation avec les dessins annexés dans lesquels des références identiques désignent des éléments identiques et dans lesquels :
- la figure 1 est une représentation schématique des systèmes de sécurité en pression installés sur un dispositif de conversion d'un liquide en vapeur selon un premier mode de réalisation de l'invention, dans lequel le disque de rupture est installé sur le corps du dispositif ; et
- la figure 2 est une représentation schématique des systèmes de sécurité en pression installés sur un dispositif de conversion d'un liquide en vapeur selon un second mode de réalisation de l'invention, dans lequel le disque de rupture est installé sur une ligne de sortie de vapeur du dispositif.

### DESCRIPTION DETAILLEE D'UN MODE DE REALISATION DE L'INVENTION

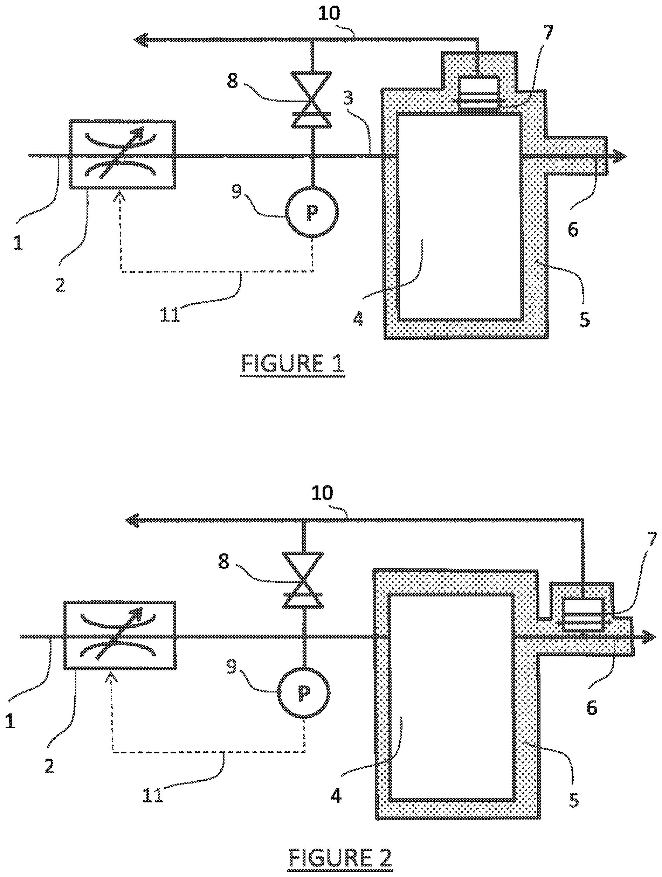

La figure 1 illustre un dispositif de conversion d'un liquide en vapeur comportant une enceinte **4** pourvue d'une sortie de vapeur **6** et d'une entrée de liquide **3**, de préférence horizontale, couplée à un régulateur de débit classique **2,** lui-même alimenté par une entrée de liquide **1**. Le régulateur de débit **2** peut être un régulateur du commerce, par exemple un régulateur de débit massique thermique ou Coriolis. L'enceinte **4** contient différents éléments assurant la conversion de liquide en vapeur, par exemple une hélice dans laquelle est insérée une résistance électrique chauffante filaire de section ronde, faisant office de moyen de chauffage. Une enveloppe isolante thermique **5** est disposée sur la paroi du dispositif pour éviter les points froids. De préférence, l'enveloppe **5** et la sortie de vapeur **6** sont maintenues à une température largement supérieure à la température d'ébullition du liquide. Par exemple, l'enveloppe isolante **5** et la sortie de vapeur **6** sont maintenues à une température de 200°C.

Afin de respecter la réglementation, un disque de rupture **7** est installé sur le corps du dispositif au niveau d'une ouverture de dépressurisation. Par exemple, ce disque de rupture **7** est conçu pour s'ouvrir à une pression de 500 mbars et pour une température de fonctionnement de 200°C. Son diamètre est au minimum égal au diamètre de la ligne de sortie vapeur **6.**

L'ouverture de dépressurisation est raccordée sur un évent de sécurité **10**, dont le rôle est de canaliser la vapeur en cas de rupture du disque de rupture **7.** Pour éviter tout point froid au niveau du disque de rupture **7**, une isolation thermique est prévue, englobant une partie de la ligne d'évent **10.**

Une soupape **8** est réglée pour fonctionner à température ambiante et pour se déclencher à une pression inférieure à la pression de rupture du disque de rupture **7.** Par exemple, la soupape **8** est réglée pour se déclencher à une pression de 450 mbars. La soupape **8** est raccordée d'un côté sur la ligne d'entrée de liquide **3**, et de l'autre sur l'évent de sécurité **10,** dont le rôle est de canaliser le liquide et la vapeur en cas d'ouverture de la soupape **8.**

Le liquide contenu dans la ligne **3** étant incompressible, il transmet la pression de vapeur de l'enceinte **4** jusqu'à la soupape **8**, laquelle s'ouvre 50 mbars plus bas que la pression de rupture du disque de rupture **7.** Cette soupape **8** protégeant le disque de rupture **7,** cela limite fortement les interventions pour remplacement de ce dernier, ce qui est intéressant en utilisation industrielle. Il existe un autre avantage à placer la soupape **8** sur la ligne d'entrée de liquide **3** : cette ligne est ainsi vidangée en cas d'ouverture de la soupape **8.** Sachant que l'augmentation de volume résultant du passage de l'état liquide à la vapeur est très importante (facteur 1700 pour changement de phase eau/vapeur), il est très utile d'empêcher que du liquide supplémentaire ne rentre dans le dispositif en cas de surpression puisque cela entrainerait une nouvelle augmentation de pression.

Un capteur de pression **9** permet de réaliser une mesure d'une pression **P.** Par exemple, le capteur de pression **9** permet d'effectuer des mesures dans la gamme de 0 à 500 mbar à température ambiante. Le capteur de pression **9** est installé sur la ligne d'entrée de **3,** et le liquide contenu dans la ligne **3** étant incompressible, la pression de vapeur de l'enceinte **4** est transmise jusqu'au capteur de pression **9.** Dans un module électronique non représenté, la valeur de pression **P** mesurée par le capteur **9** est comparée à un seuil réglable entre 50 mbar et 450 mbar et, si la pression **P** dépasse ce seuil, un asservissement stoppe l'envoi de liquide par le régulateur **2** et coupe la puissance électrique sur la surface d'évaporation interne du dispositif.

Dans le premier mode de réalisation illustré sur la figure 1, l'ouverture de dépressurisation contenant le disque de rupture **7** est disposée au niveau d'une paroi supérieure de l'enceinte **4.**

Selon un second mode de réalisation illustré sur la figure 2, l'ouverture de dépressurisation est disposée sur la ligne **6** de sortie vapeur. Conformément à la réglementation, puisque la tuyauterie de sortie vapeur est raccordée à la partie supérieure du dispositif, le disque de rupture **7** placé sur cette tuyauterie est considéré comme « placé directement à la partie supérieure du dispositif» et respecte les préconisations de la réglementation.

L'invention décrite en référence avec les figures 1 et 2 présente trois niveaux de sécurité permettant de prévenir toute surpression :
- un niveau règlementaire avec un disque de rupture **7** ;
- un niveau réglable protégeant les équipements en aval de l'enceinte **4,** réalisé par le capteur **9** et un asservissement du régulateur de débit **2** ; et
- un niveau fixe comportant une soupape **8** protégeant le disque de rupture **7** et vidant la ligne d'arrivée de liquide **3.**

L'invention permet ainsi de prévenir efficacement les surpressions en limitant la complexité, et donc le coût, des éléments mis en oeuvre. En effet, les éléments disposés sur la ligne d'arrivée de liquide **3** fonctionnent à température ambiante plutôt qu'à haute température, et l'utilisation d'un disque de rupture **7** est plus économique que l'utilisation d'une soupape au niveau de l'enceinte **4.**

L'invention permet ainsi de limiter les durées d'indisponibilité du dispositif et les interventions de maintenance corrective grâce aux trois niveaux de sécurité, dont seulement le disque de rupture **7** nécessite une intervention corrective manuelle.

## Revendications

1. Dispositif de conversion d'un liquide en vapeur comprenant :
- une enceinte (4) munie d'une ouverture connectée à une entrée de liquide (3), d'une ouverture de dépressurisation et d'une sortie de vapeur (6),
- un régulateur de débit (2) disposé au niveau de l'entrée de liquide (3), et
- un disque de rupture (7) installé au niveau de l'ouverture de dépressurisation,
***caractérisé* en ce que** le dispositif comporte également des moyens de limitation de la pression disposés au niveau de l'entrée de liquide (3), lesdits moyens de limitation de la pression étant configurés pour réduire le débit dans l'entrée de liquide (3) lorsque la pression (P) dans l'entrée de liquide (3) dépasse une valeur seuil inférieure à une pression de rupture du disque de rupture (7).

2. Dispositif de conversion d'un liquide en vapeur selon la revendication 1, ***caractérisé* en ce que** les moyens de limitation de la pression comportent un capteur de pression (9), le régulateur de débit (2) étant configuré pour stopper le débit de liquide injecté dans l'entrée de liquide (3) lorsqu'une pression (P) mesurée par le capteur de pression (9) dépasse une valeur seuil.

3. Dispositif de conversion d'un liquide en vapeur selon la revendication 2, ***caractérisé* en ce que** le dispositif comporte également des moyens de chauffage disposés dans l'enceinte (4), lesdits moyens de chauffage étant configurés pour stopper le chauffage de l'enceinte (4) lorsqu'une pression (P) mesurée par le capteur de pression (9) dépasse une valeur seuil.

4. Dispositif de conversion d'un liquide en vapeur selon la revendication 2 ou 3, ***caractérisé* en ce que** la valeur seuil de la pression (P) mesurée par le capteur de pression (9) est comprise entre 1% et 90% de la pression de rupture du disque de rupture (7).

5. Dispositif de conversion d'un liquide en vapeur selon l'une des revendications 1 à *4,* ***caractérisé* en ce qu'**il comporte également un évent de sécurité (10) en communication hydraulique avec l'ouverture de dépressurisation de sorte à canaliser la vapeur issue de l'enceinte (4) lorsque le disque de rupture (7) est ouvert.

6. Dispositif de conversion d'un liquide en vapeur selon la revendication 5, ***caractérisé* en ce que** l'enceinte (4) et au moins une partie de l'évent de sécurité (10) sont recouvertes d'une isolation thermique (5).

7. Dispositif de conversion d'un liquide en vapeur selon la revendication 5 ou 6, ***caractérisé* en ce que** les moyens de limitation de la pression comportent une soupape (8) connectée d'une part à l'entrée de liquide (3) et d'autre part à l'évent de sécurité (10), la soupape (8) étant configurée pour extraire une partie du liquide présent dans l'entrée de liquide (3) lorsque la pression dans l'entrée de liquide (3) dépasse une valeur seuil.

8. Dispositif de conversion d'un liquide en vapeur selon la revendication 7, ***caractérisé* en ce que** la valeur seuil d'ouverture de la soupape (8) est comprise entre 80% et 95% de la pression de rupture du disque de rupture (7).

9. Dispositif de conversion d'un liquide en vapeur selon l'une des revendications 1 à 8, ***caractérisé* en ce que** l'ouverture de dépressurisation est disposée au niveau d'une paroi supérieure de l'enceinte (4).

10. Dispositif de conversion d'un liquide en vapeur selon l'une des revendications 1 à 8, ***caractérisé* en ce que** l'ouverture de dépressurisation est disposée au niveau d'un conduit reliant l'enceinte (4) à la sortie de vapeur (6).

## Patentansprüche

1. Vorrichtung zur Umwandlung einer Flüssigkeit in Dampf, die umfasst:
- ein Gehäuse (4) mit einer Öffnung, die mit einem Flüssigkeitseinlass (3), einer Druckentlastungsöffnung und einem Dampfauslass (6) verbunden ist,
- einen Durchflussmengenregler (2), der in Höhe des Flüssigkeitseinlasses (3) angeordnet ist und
- einer Berstscheibe (7), die in Höhe der Druckentlastungsöffnung installiert ist,
***dadurch gekennzeichnet, dass*** die Vorrichtung auch Druckbegrenzungselemente enthält, die in Höhe des Flüssigkeitseinlasses (3) angeordnet ist, wobei diese Druckbegrenzungselemente dazu konfiguriert sind, die Durchflussmenge im Flüssigkeitseinlass (3) zu verringern, wenn der Druck (P) im Flüssigkeitseinlass (3) einen Schwellenwert überschreitet, der niedriger liegt als der Berstdruck der Berstscheibe (7).

2. Vorrichtung zur Umwandlung einer Flüssigkeit in Dampf gemäß Anspruch 1, ***dadurch gekennzeichnet, dass*** die Druckbegrenzungselemente einen Druckfühler (9) enthalten, wobei der Durchflussmengenregler (2) dazu konfiguriert ist, den Durchfluss der in den Flüssigkeitseinlass (3) eingespritzte Flüssigkeitsmenge zu stoppen, wenn ein vom Druckfühler (9) gemessener Druck (P) den Schwellenwert übersteigt.

3. Vorrichtung zur Umwandlung einer Flüssigkeit in Dampf gemäß Anspruch 2, ***dadurch gekennzeichnet, dass*** die Vorrichtung auch Heizelemente enthält, die im Gehäuse (4) angeordnet sind, wobei diese Heizelemente dazu konfiguriert sind, die Erwärmung des Gehäuses (4) zu stoppen, wenn ein vom Druckfühler (9) gemessener Druck (P) den Schwellenwert übersteigt.

4. Vorrichtung zur Umwandlung einer Flüssigkeit in Dampf gemäß Anspruch 2 oder 3, ***dadurch gekennzeichnet, dass*** der Schwellenwert des vom Druckfühler (9) gemessenen Drucks (P) zwischen 1% und 90 % des Berstdrucks der Berstscheibe (7) beträgt.

5. Vorrichtung zur Umwandlung einer Flüssigkeit in Dampf gemäß einem der vorstehenden Ansprüche 1 bis 4, ***dadurch gekennzeichnet, dass*** sie außerdem eine Sicherheitsöffnung (10) enthält, in hydraulischer Kommunikation mit der Druckentlastungsöffnung, so dass der aus dem Gehäuse (4) entweichende Dampf abgeleitet wird, wenn die Berstscheibe (7) offen ist.

6. Vorrichtung zur Umwandlung einer Flüssigkeit in Dampf gemäß Anspruch 5, ***dadurch gekennzeichnet, dass*** das Gehäuse (4) und zumindest ein Teil der Sicherheitsöffnung (10) von einer Wärmeisolierung (5) bedeckt sind.

7. Vorrichtung zur Umwandlung einer Flüssigkeit in Dampf gemäß Anspruch 5 oder 6, ***dadurch gekennzeichnet, dass*** die Druckbegrenzungselemente ein Ventil (8) umfassen, das einerseits mit dem Flüssigkeitseinlass (3) und andererseits mit der Sicherheitsöffnung (10) verbunden ist, wobei das Ventil (8) dazu konfiguriert ist, einen Teil der im Flüssigkeitseinlass (3) vorhandenen Flüssigkeit abzuleiten, wenn der Druck im Flüssigkeitseinlass (3) einen Schwellenwert übersteigt.

8. Vorrichtung zur Umwandlung einer Flüssigkeit in Dampf gemäß Anspruch 7, ***dadurch gekennzeichnet, dass*** der Schwellenwert zur Öffnung des Ventils (8) zwischen 80% und 95% des Berstdrucks der Berstscheibe (7) beträgt.

9. Vorrichtung zur Umwandlung einer Flüssigkeit in Dampf gemäß einem der vorstehenden Ansprüche 1 bis 8, ***dadurch gekennzeichnet, dass*** die Druckentlastungsöffnung in Höhe einer oberen Wand des Gehäuses (4) angeordnet ist.

10. Vorrichtung zur Umwandlung einer Flüssigkeit in Dampf gemäß einem der vorstehenden Ansprüche 1 bis 8, ***dadurch gekennzeichnet, dass*** die Druckentlastungsöffnung in Höhe einer Leitung angeordnet ist, die das Gehäuse (4) mit dem Dampfauslass (6) verbindet.

## Claims

1. A device for converting a liquid into vapor, comprising:
- a chamber (4) provided with an opening connected to a liquid intake (3), with a pressure relief opening, and with a vapor outlet (6).
- a flow controller (2) arranged at the level of the liquid intake (3), and
- a burst disk (7) installed at the level of the pressure relief opening,
***characterized* in that** the device also comprises pressure-limiting means arranged at the level of the liquid intake (3), said pressure-limiting means being configured to decrease the flow rate in the liquid intake (3) when the pressure (P) in the liquid intake (3) exceeds a threshold value smaller than a bursting pressure of the burst disk (7).

2. The liquid-to-vapor conversion device of claim 1, ***characterized* in that** the pressure-limiting means comprise a pressure sensor (9), the flow controller (2) being configured to stop the liquid flow injected into the liquid intake (3) when a pressure (P) measured by the pressure sensor (9) exceeds a threshold value.

3. The liquid-to-vapor conversion device of claim 2, ***characterized* in that** the device also comprises heating means arranged in the chamber (4), said heating means being configured to stop the heating of the chamber (4) when a pressure (P) measured by the pressure sensor (9) exceeds a threshold value.

4. The liquid-to-vapor conversion device of claim 2 or 3, ***characterized* in that** the threshold value of the pressure (P) measured by the pressure sensor (9) is in the range from 1% to 90% of the bursting pressure of the burst disk (7).

5. The liquid-to-vapor conversion device of any of claims 1 to 4, ***characterized* in that** it also comprises a safety vent (10) in hydraulic communication with the pressure relief opening to channel the vapor originating from the chamber (4) when the burst disk (7) is open.

6. The liquid-to-vapor conversion device of claim 5, ***characterized* in that** the chamber (4) and at least a portion of the safety vent (10) are covered with a thermal insulation (5).

7. The liquid-to-vapor conversion device of claim 5 or 6, ***characterized* in that** the pressure-limiting means comprise a valve (8) connected on the one hand to the liquid intake (3) and on the other hand to the safety vent (10), the valve (8) being configured to extract part of the liquid present in the liquid intake (3) when the pressure in the liquid intake (3) exceeds a threshold value.

8. The liquid-to-vapor conversion device of claim 7, ***characterized* in that** the threshold value for opening the valve (8) is in the range from 80% to 95% of the bursting pressure of the burst disk (7).

9. The liquid-to-vapor conversion device of claims 1 to 8, ***characterized* in that** the pressure relief opening is arranged at the level of an upper wall of the chamber (4).

10. The liquid-to-vapor conversion device of any of claims 1 to 8, ***characterized* in that** the pressure relief opening is arranged at the level of a duct connecting the chamber (4) to the vapor outlet (6).
